**Europäisches Patentamt**

(19) **European Patent Office**

**Office européen des brevets**

(11) Veröffentlichungsnummer: **0 328 096**
**B1**

# (12) EUROPÄISCHE PATENTSCHRIFT

(45) Veröffentlichungstag der Patentschrift:
**27.12.90**

(21) Anmeldenummer: **89102228.7**

(22) Anmeldetag: **09.02.89**

(51) Int. Cl.⁵: **B29C 33/00,** B29C 31/06,
B29D 23/20, B29C 43/36,
B29C 43/34

(54) Verfahren und Vorrichtung zur Herstellung von Presskörpern aus thermoplastischem Kunststoffmaterial.

(30) Priorität: **12.02.88 DE 3804464**

(43) Veröffentlichungstag der Anmeldung:
**16.08.89 Patentblatt 89/33**

(45) Bekanntmachung des Hinweises auf die Patenterteilung:
**27.12.90 Patentblatt 90/52**

(84) Benannte Vertragsstaaten:
**AT BE CH DE ES FR GB GR IT LI LU NL SE**

(56) Entgegenhaltungen:
**DE-U- 8 801 851**
**FR-A- 2 095 622**
**FR-A- 2 542 252**
**FR-A- 2 596 699**
**GB-A- 2 053 077**
**US-A- 2 403 948**
**US-A- 3 256 378**
**US-A- 3 670 066**

(73) Patentinhaber: **AISA AUTOMATION INDUSTRIELLE SA,**
**Route de Savoie, CH-1896 Vouvry(CH)**

(72) Erfinder: **Keller, Gerhard, Chemin du Maconnex,**
**CH-1805 Jongny(CH)**
Erfinder: **Iseli, Andreas, Rue de la Tour,**
**CH-1867 Ollon(CH)**

(74) Vertreter: **Patentanwälte Zellentin & Partner,**
**Zweibrückenstrasse 15, D-8000 München 2(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von Preßkörpern aus thermoplastischem Kunststoffmaterial durch Erwärmen des thermoplastischen Materials, Formen eines Rohlings mittels einer gegebenenfalls ringförmigen Düse und Abtrennen gegebenenfalls unter Verwendung eines die Düse umgebenden, auf die Trennstelle gerichteten erwärmten Gasstroms, Einführen des Rohlings in eine Preßform, Schließen der Preßform, Formen des Preßkörpers durch Anlegen eines Preßdrucks und Abkühlen des Preßkörpers mindestens teilweise unter Druck, sowie eine Vorrichtung zur Durchführung des Verfahrens mit einem Extruder zum Erwärmen von thermoplastischem Kunststoffmaterial mit einer gegebenenfalls ringförmigen, zur Ausgabe von Materialportionen geeigneten verschließbaren Düse, die gegebenenfalls von einer Ringdüse zum Ausströmen eines gegebenenfalls erwärmten, gegen die Abtrennstelle der Materialportionen von der Düse gerichteten Gasstroms umgeben ist, mit mindestens einer schließbaren aus einer Formmatrize und einem Formdorn bestehenden Preßform, wobei die Formmatrize einerseits unterhalb der Düse und andererseits koaxial zum Formdorn anordnenbar ist und wobei auf den Formdorn und/oder die Formmatrize ein Preßdruck anleg- und aufrechterhaltbar ist.

Ein derartiges Verfahren ist aus der US-PS 3 313 875 bekannt. Hierbei wird das thermoplastische Material aus einer Ringdüse ausgegeben und an einem Düsenfortsatz angelegt, wobei die Verbindung mit dem Düsenspalt erhalten bleibt und es am Düsenfortsatz haftet, von wo es später beim Schließen der Form abgestreift wird. Hierdurch erfolgt einerseits bereits eine Abkühlung des Rohlings bevor er in die Preßform gelangt und andererseits ergeben sich Probleme beim Abstreifen auf Grund der Haftung, des Klebens des thermoplastischen Materials am Düsenfortsatz bei der Funktion des Abstreifers.

Ein ähnliches Verfahren ist in der DE-PS 30 23 415, auf welcher die Oberbegriffe der Ansprüche 1 und 3 basieren, beschrieben. Hierbei werden die aus der Düse durch deren Schließen abgetrennten Rohlinge im freien Fall in den Preßhohlraum zugeführt. Hierdurch gelangen die abgetrennten Materialportionen während ihrer Abwärtsbewegung nicht in Kontakt mit den gekühlten Flächen der Preßform. Jedoch verbleiben die Rohlinge längere Zeit, die ein zigfaches der Fallzeit betrifft, nämlich bis die Preßform von der Düse weg in die axiale Stellung mit dem Preßstempel gebracht wird, in der gekühlten Preßform. Hierbei weisen sie verhältnismäßig große Berührungsflächen mit der gekühlten Form auf, so daß der Kunststoff an diesen Berührungsflächen abzukühlen beginnt und sich nicht mehr gut verpressen läßt, so daß die Qualität der hergestellten Preßkörper leidet. Wenn die Düse und/oder deren Schließkörper nicht mit allerhöchster Präzision ausgeführt sind oder anhaftende Verunreinigungen aufweisen, erfolgt das Abtrennen des Rohlings nicht exakt gleichzeitig am gesamten Umfang, so daß der Rohling nicht exakt ausgerichtet in den Formhohlraum fällt, was allein oder in Zusammenhang mit den bereits an der gekühlten Wand der Form abkühlenden Teilen der Kunststoffmasse zu ungleichmäßigen Preßkörpern, d.h. zu Ausschuß führt. Der gleiche negative Effekt kann auch dadurch bewirkt werden, daß der gegebenenfalls vorgesehene ringförmige auf die Trennstelle des Rohlings von der Düse gerichtete Gasstrom auf diesen ungleichmäßig einwirkt und somit einerseits ein ungleichmäßiges Ablösen des Rohlings bewirkt und andererseits diesen in einer außeraxialen Richtung beschleunigt, so daß der Rohling nicht zentriert in den Formhohlraum gelangen kann.

Aus der US-PS 3 313 875, der DE-PS 30 23 415, aber auch der DE-PS 28 42 515 sind Vorrichtungen bekannt, mit denen die mit den oben geschilderten Problemen behafteten Verfahren durchgeführt werden können.

Aufgabe der Erfindung ist es, das Verfahren und die Vorrichtung der eingangs genannten Art dahingehend zu verbessern, daß der Kontakt des Rohlings mit der gekühlten Preßform auf ein Minimum beschränkt bleibt.

Diese Aufgabe wird durch ein Verfahren mit den Merkmalen des Anspruchs 1 gelöst.

Durch das Ablegen des aus der Düse austretenden thermoplastischen erwärmten Materials auf der einen Teil der Preßform bildenden Oberfläche eines unter die Düse ausgefahrenen Zwischenträgers, wird einerseits wegen des kurzen Wegs eine gerichtete und damit zentrierte Ausgabe erreicht, so daß ein ungleichmäßiges Abtrennen bzw. eventuelle Verunreinigungen entlang des Umfangs keinen Einfluß auf die Lage des Rohlings ausüben können. Entsprechendes gilt für die Wirkung eines gegebenenfalls vorhandenen ringförmigen Gasstroms. Der Rohling liegt nur auf einem Teil der Preßform auf, so daß eine dort erfolgende Abkühlung auf die Qualität des Preßkörpers praktisch keinen Einfluß hat. Durch das Halten des Zwischenträgers in der ausgefahrenen Stellung wird der Rohling mit Ausnahme seiner Auflagefläche allseitig von warmer Umgebungsluft umspült, so daß der Rohling erst dann mit dem größeren Teil der gekühlten Preßform in Kontakt kommt, wenn auch der eigentliche Preßvorgang einsetzt.

Dadurch, daß vom Moment der Herstellung des Rohlings bis zum Verpressen des Rohlings er nur einer geringfügigen Abkühlung unterliegt und dann praktisch nur an Stellen, die bei der endgültigen Formgebung nicht mehr bewegt werden müssen, kann die Temperatur des erwärmten Kunststoffs niedriger sein als bei den bekannten Verfahren, was einerseits Energie zum Aufschmelzen einspart und andererseits die Verfestigung beschleunigt, da nicht solange gekühlt werden muß. Somit trägt die Erfindung zum Energieeinsparen und zur Beschleunigung des Herstellungsprozesses erheblich bei.

Nach einer vorteilhaften Ausgestaltung des erfindungsgemäßen Verfahrens wird der Rohling derart auf die Oberfläche des Zwischenträgers abgelegt, daß er diese am Umfang überlappt. Hierdurch wird die Kontaktfläche des Rohlings mit dem Zwischenträger weiter verringert, so daß er noch weniger abgekühlt werden kann.

Die Aufgabe wird auch durch eine Vorrichtung mit den Merkmalen des Anspruchs 3 gelöst. Vorteilhafte Ausführungen der Vorrichtung sind den Ansprüchen 4 und 5 zu entnehmen.

Da die Oberfläche des Zwischenträgers ein Teil der die endgültige Form des Preßkörpers begrenzenden Preßform ist, ist eine im Kontaktbereich mögliche geringe Abkühlung des Rohlings nicht von Nachteil, da der Kunststoff aus diesem zentralen Bereich während des eigentlichen Preßvorgangs nicht entfernt zu werden braucht.

Nachfolgend wird die Erfindung an einem Ausführungsbeispiel einer Vorrichtung zur Herstellung von Kopfstücken für Tuben, wobei gleichzeitig der Tubenkörper mit dem herzustellenden Kopfstück verbunden werden kann, unter Bezug auf Zeichnungen näher erläutert. Es zeigt in schematischer Schnittdarstellung:

Fig. 1 eine offene Düse zur Ausgabe von thermoplastischem Kunststoffmaterial und einen Zwischenträger, der Bestandteil einer Formmatrize einer Preßform ist,

Fig. 2 das gleiche wie in Fig. 1, wobei die Düse, geschlossen ist,

Fig. 3 die Formmatrize gemäß Fig. 1 und 2, der ein Formdorn zugestellt ist,

Fig. 4 die Verpreßstellung von Formmatrize und Formdorn.

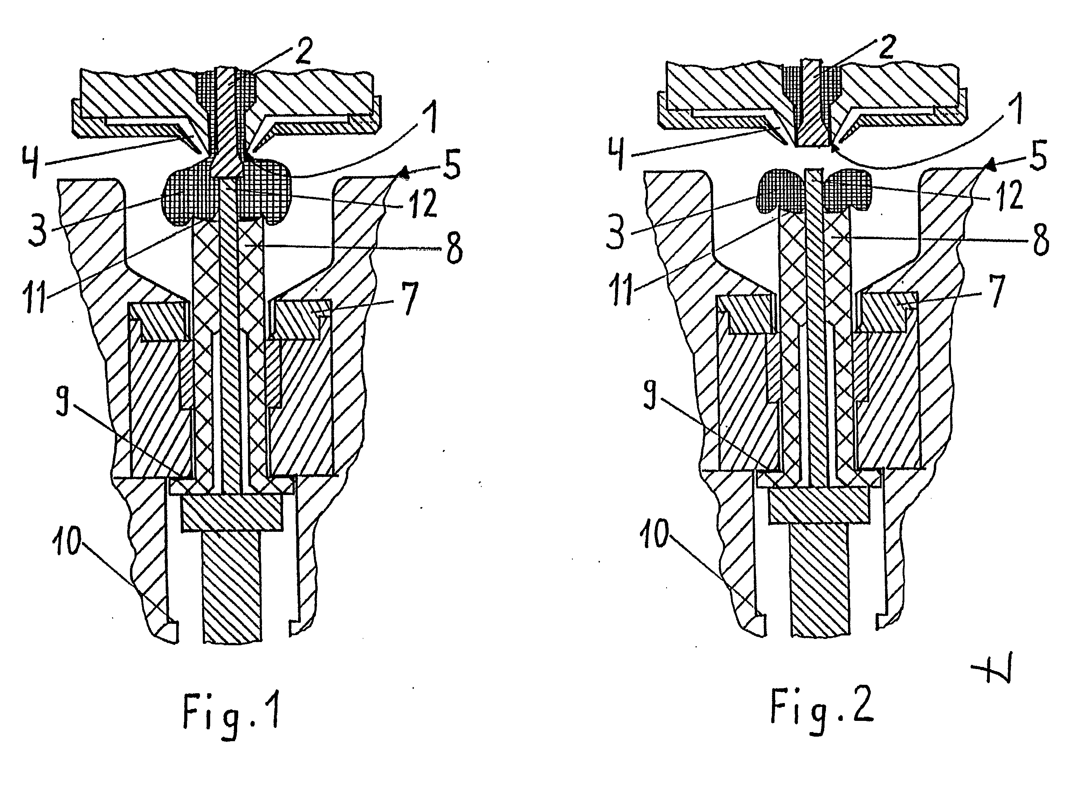

In Fig. 1 und 2 ist eine Düse 1 zur Ausgabe von thermoplastischem Material aus einem nicht dargestellten Extruder zum Erwärmen des thermoplastischen Kunststoffmaterials dargestellt. Die Düse 1 weist einen Schließkörper 2 auf, mit der eine gewünschte Menge eines Kunststoffmaterials als ringförmiger Rohling 3 ausgegeben werden kann. Die Ausgabeöffnung der Düse 1 ist von einer Ringdüse 4 umgeben. Der Ringdüse 4 kann beispielsweise Heißluft zugeführt werden, die zum leichteren Abtrennen des Rohlings 3 beim Schließen des Schließkörpers 2 der Düse 1 dienen kann, und auch dazu, den in der Stellung gehaltenen Rohling 3 mit Heißluft zu umspülen und ihn so vor einem Abkühlen zu bewahren.

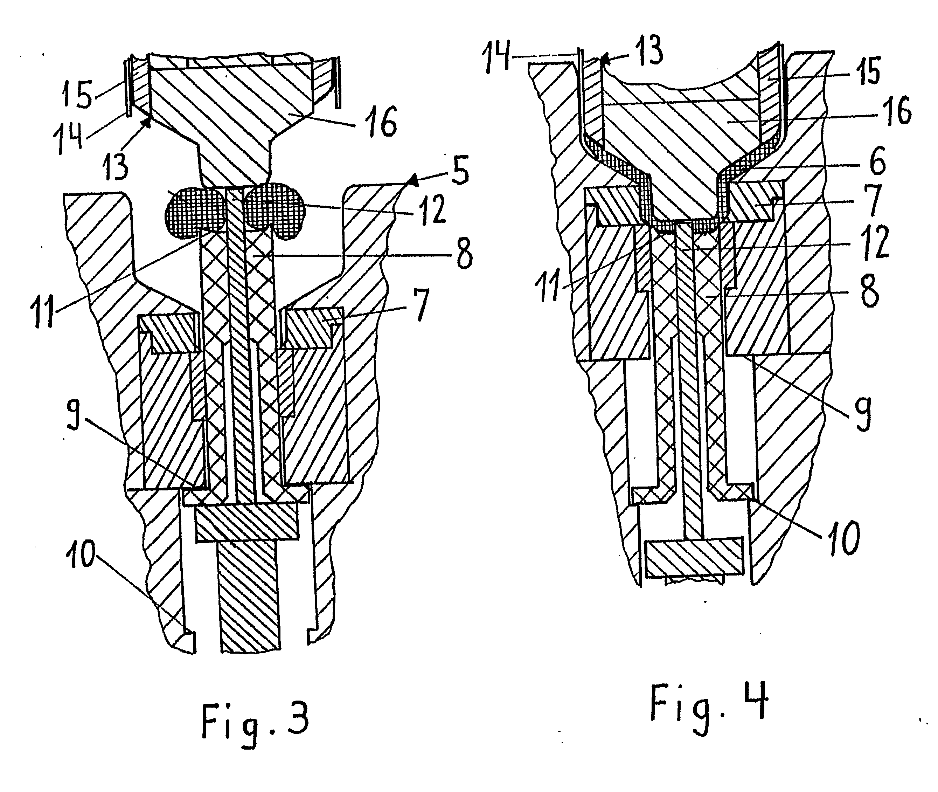

Axial zur Düse 1 ist eine Formmatrize 5 angeordnet, die Teil einer Preßform zur Herstellung eines Tubenkopfes 6 (Fig. 4) ist. Das Innere der Formmatrize 5 ist so gestaltet, daß sie die Außenform des herzustellenden Tubenkopfes 6 wiedergibt. Üblicherweise ist die Formmatrize 5 mehrteilig aufgebaut und weist einen Teil 7 für den mit einem Gewinde versehenen Hals des Tubenkopfes 6 auf. Zentral und axial verschiebbar ist in der Formmatrize 5 ein Zwischenträger 8 zwischen oberen und unteren Anschlägen 9, 10 verschiebbar angeordnet. In der oberen, durch den Anschlag 9 begrenzten Endstellung ist der Zwischenträger in einem derartigen Abstand zur Düse 1 angeordnet, daß das aus der Düse 1 austretende Material direkt auf die Oberfläche 11 des Zwischenträgers 8 abgelegt wird. Der Abstand zwischen der Oberfläche 11 und der Düse 1 kann so gewählt werden, daß die benötigte Materialmenge gerade Platz findet. Es ist aber auch möglich, die Oberfläche 11 des Zwischenträgers 8 direkt unter der Düse 1 anzuordnen und entsprechend der Ausgabemenge den Zwischenträger 8 kontinuierlich abzusenken.

Zentral innerhalb des Zwischenträgers 8 ist koaxial ein ausfahrbarer Stab 12 angeordnet, der über die Oberfläche 11 des Zwischenträgers 8 hinausragt und einerseits zum Zentrieren des den Rohling 3 bildenden, aus der Düse 1 ausfließenden Kunststoffstroms mit ringförmigem Querschnitt dient und andererseits beim Pressen des Tubenkopfes 6 dessen Ausgabeöffnung frei hält.

Das Aus- und Einfahren des Zwischenträgers 8 und des Stabes 12 kann durch einen beliebigen bekannten Antrieb (nicht dargestellt) z.B. durch Federkraft, hydraulisch oder pneumatisch erfolgen.

Die Oberfläche 11 kann plan gestaltet oder den Bedürfnissen der Gestaltung des Tubenkopfes angepaßt werden. Vorzugsweise kann die Oberfläche 11 des Zwischenträgers 8 konkav oder tellerförmig oder mit erhöhtem Rand (s.d.Fig.) ausgeführt werden. Die Oberfläche 11 bildet im eingefahrenen Zustand des Zwischenträgers 8 (s. Fig. 4) den die umgebende Außenfläche der Ausgabeöffnung des Tubenkopfes 6 gestaltenden Teil der Formmatrize 5.

In Fig. 3 ist das untere Ende eines Formdornes 13 dargestellt. Der Formdorn 13 weist eine einen Tubenkörper 14 tragende Hülse 15 auf, in der axial beweglich ein die Innenform des Tubenkopfes 6 wiedergebender Preßstempel 16 relativ zur Hülse 15 bewegbar angeordnet ist.

Das Verfahren wird in der Vorrichtung wie folgt durchgeführt. Eine Formmatrize 5 wird unterhalb der Düse 1 des nicht dargestellten Extruders angeordnet. Nach Öffnen des Schließkörpers 2 der Düse 1 fließt ein Strom erwärmten thermoplastischen Kunststoffmaterials mit ringförmigem Querschnitt aus der Düsenöffnung aus und stützt sich auf der Oberfläche 11 des Zwischenträgers 8 bei geöffneter Düse 1 ab. Die Düse 1 bleibt solange geöffnet, bis die erforderliche Menge an Material ausgeflossen ist, wobei dieses vorzugsweise die Ränder der Oberfläche 11 des Zwischenträgers 8 frei überlappen soll. Während die Düse 1 geöffnet ist, steht der Stab 12 im Zwischenträger 8 in Berührungskontakt mit dem Schließkörper 2 der Düse 1, wodurch das rohrförmig austretende Kunststoffmaterial im Inneren geführt und zentriert wird. Durch das Schließen des Schließkörpers 2, gegebenenfalls unter Unterstützung eines aus der Ringdüse 4 austretenden erhitzten Gasstroms, wird der Zufluß von weiterem Kunststoffmaterial abgeschnitten und ein ringförmiger Rohling 3 mit überlappenden Rändern abgetrennt, wie dies aus Fig. 2 ersichtlich ist. Wie aus Fig. 2 ersichtlich ist, besteht, bezogen auf die Gesamtmasse des Rohlings 3, nur ein geringer Kontakt mit dem Zwischenträger 8 bzw. dem Stab 12, so daß eine nennenswerte Abkühlung nicht erfolgen kann, insbesondere auch deshalb nicht, weil weder der Stab 12 noch der Zwischenträger 8 im Gegensatz zur Formmatrize 5 direkt gekühlt sind (die übliche Kühlung der Formmatrize, um ein schnelleres Abkühlen zu gewährleisten, ist nicht dargestellt). Eine geringe Abkühlung an den Kontaktstellen kann nicht nur hingenommen, sondern auch positiv bewertet werden, da die Kontaktstellen beim eigentlichen Preßvorgang praktisch nicht oder kaum bewegt werden müssen, so daß eine hohe Mobilität des Kunststoffmaterials dort nicht erforderlich ist.

Durch die Luftisolierung zur gekühlten Formmatrize 5 kann diese praktisch keine Kühlwirkung auf den Rohling 3 übertragen. Sofern aus der Ringdüse 4 erhitzte Luft austritt, wird der Rohling 3 umspült und kann so auf der jeweils gewünschten Temperatur durch Regelung der Lufttemperatur gehalten werden, d.h. gegebenenfalls auch erhitzt werden. In der oberen Stellung wird der Rohling 3 solange gehalten, bis die Formmatrize 5 koaxial zum Formdorn 13 ausgerichtet ist. Da die Formmatrizen 5 üblicherweise in einem Drehtisch angeordnet sind, kann dies über ein oder mehrere Taktschritte erfolgen, ohne daß eine wesentliche Abkühlung des Rohlings 3 zu befürchten wäre, wie dies bei Ablage eines Rohlings 3 aus der Düse direkt in eine gekühlte Formmatrize zwangsläufig der Fall ist. Bei Zustellung des Formdorns 13 (s. Fig. 3), d.h., wenn sein Preßstempel 16 mit dem oberen Ende des Stabes 12 in Kontakt tritt, wird bei der weiteren Absenkung des Formdornes 13 auch der Zwischenträger 8 mit dem Stab 12 bis zum unteren Anschlag 10 abgesenkt. Hierbei gelangt auch die Hülse 15 mit dem Tubenkörper 14 in die vorgesehene Position innerhalb der Formmatrize 5, wonach ausschließlich der Preßstempel 16 innerhalb der Hülse 15 unter Ausübung des Preßdrucks weiter in die Formmatrize 5 abgesenkt wird, wobei er auch den Stab 12 relativ zum Zwischenträger 8 in die in Fig. 4 dargestellte Stellung verschiebt, wobei sowohl die endgültige Form des Tubenkopfes 6 als auch dessen Verbindung mit dem Tubenkörper erfolgt. In dieser Position wird der Preßstempel 16 unter Druck solange gehalten, bis die zum Abkühlen erforderliche Zeit verstrichen ist. Es ist selbstverständlich möglich, daß nur die Formmatrize gegen einen feststehenden Formdorn oder umgekehrt bewegt wird; es ist aber auch möglich, daß sich sowohl Formdorn als auch Matrize gegeneinander bewegen.

## Patentansprüche

1. Verfahren zur Herstellung von Preßkörpern (6) aus thermoplastischem Kunststoffmaterial durch Erwärmen des thermoplastischen Materials, Formen eines Rohlings (3) mittels einer gegebenenfalls ringförmigen Düse (4) und Abtrennen gegebenenfalls unter Verwendung eines die Düse (4) umgebenden, auf die Trennstelle gerichteten erwärmten Gasstroms, Einführen des Rohlings (3) in eine Preßform, Schließen der Preßform, Formen des Preßkörpers (6) durch Anlegen eines Preßdrucks und Abkühlen des Preßkörpers (6) mindestens teilweise unter Druck, **dadurch gekennzeichnet,** daß das gesamte für einen Rohling (3) erforderliche erwärmte thermoplastische Material auf der einen Teil der Preßform bildenden Oberfläche (11) eines unter die Düse (4) ausgefahrenen Zwischenträgers (8) abgelegt und von der Düse (4) abgetrennt wird und daß der Zwischenträger (8) beim Schließen der Preßform abgesenkt wird.

2. Verfahren nach Anspruch 1, dadurch gekennzeichnet, daß der Rohling (3) derart auf die Oberfläche (11) des Zwischenträgers (8) abgelegt wird, daß er diese am Umfang überlappt.

3. Vorrichtung zur Durchführung des Verfahrens nach Anspruch 1 mit einem Extruder zum Erwärmen von thermoplastischem Kunststoffmaterial mit einer gegebenenfalls ringförmigen, zur Ausgabe von Materialportionen geeigneten verschließbaren Düse (1), die gegebenenfalls von einer Ringdüse (4) zum Ausströmen eines gegebenenfalls erwärmten, gegen die Abtrennstelle der Materialportionen von der Düse (1) gerichteten Gasstroms umgeben ist, mit mindestens einer schließbaren aus einer Formmatrize (5) und einem Formdorn (13) bestehenden Preßform, wobei die Formmatrize (5) einerseits unterhalb der Düse (1) und andererseits koaxial zum Formdorn (13) anordenbar ist und wobei auf den Formdorn (13) und/oder die Formmatrize (5) ein Preßdruck anleg- und aufrechterhaltbar ist, dadurch gekennzeichnet, daß in der Formmatrize (5) ein ausfahrbarer Zwischenträger (8) angeordnet ist, dessen freie Oberfläche (11) in eingefahrener Stellung einen Teil der den Preßkörper wiedergebenden Formfläche der Formmatrize (5) bildet.

4. Vorrichtung nach Anspruch 3, dadurch gekennzeichnet, daß im Zwischenträger (8) ein koaxial angeordneter, axial ausfahrbarer Stab (12) angeordnet ist.

5. Vorrichtung nach Anspruch 3 oder 4, dadurch gekennzeichnet, daß die Oberfläche (11) am Umfang eine Erhöhung aufweist.

## Claims

1. Process for the production of pressed articles (6) from thermoplastic synthetic plastics material by heating of the thermoplastic material, shaping of a blank (3) by means of a possibly annular nozzle (4) and severance, possibly using a heated gas current surrounding the nozzle (4) and directed on to the severance point, introduction of the blank (3) into a press mould, closure of the press mould, shaping of the pressed article (6) by application of a pressure and cooling of the pressed article (6) at least partially under pressure, characterised in that the whole of the heated thermoplastic material necessary for a blank (3) is deposited on the surface (11) forming a part of the press mould, of an intermediate carrier (8) driven out under the nozzle (4), and is severed from the nozzle (4), and in that the intermediate carrier (8) is lowered in the closure of the press mould.

2. Process according to Claim 1, characterised in that the blank (3) is deposited upon the surface (11) of the intermediate carrier (8) in such a way that it overlaps the periphery of the latter.

3. Apparatus for carrying out the process according to Claim 1, with an extruder for heating thermoplastic synthetic plastics material, with a possibly annular closable nozzle (1) suitable for the issue of material portions, which nozzle (1) may be surrounded by an annular nozzle (4) for the outflow of a possibly heated gas current directed towards the point of severance of the material portions from the nozzle (1), with at least one closable press mould consisting of a mould matrix (5) and a mould mandrel (13), the mould matrix (5) being arrangeable for the one part beneath the nozzle (1) and for the other part coaxially with the mould mandrel (13) while a pressure can be applied to the mould mandrel (13) and/or the mould matrix (5) and maintained, characterised in that in the mould matrix (5) there is arranged an outwardly movable intermediate carrier (8), the free surface (11) of which in the retracted position forms a part of the mould surface, reproducing the pressed article, of the mould matrix (5).

4. Apparatus according to Claim 3, characterised in that a coaxially arranged rod (12) which can be driven out axially is arranged in the intermediate carrier (8).

5. Apparatus according to Claim 3 or 4, characterised in that the surface (11) has an elevated portion on the circumference.

## Revendications

1. Procédé pour produire des pièces moulées par compression (6) de matériau synthétique thermoplastique, par échauffement du matériau thermoplastique, formage d'une ébauche (3) au moyen d'une filière (4) ayant éventuellement une forme annulaire et séparation, éventuellement en utilisant un flux de gaz chaud entourant la filière (4) et dirigé sur le point de séparation ou de sectionnement, introduction de l'ébauche (3) dans un moule à pression, fermeture du moule, moulage de la pièce (6) par application d'une pression de moulage et refroidissement de la pièce moulée (6) au moins en partie sous pression, caractérisé en ce qu'il comprend le dépôt de la totalité du matériau thermoplastique chauffé, nécessaire pour une ébauche (3), sur la surface (11) formant une partie du moule de pression, d'un support intermédiaire (8) s'étendant sous la filière (4), avec séparation de ce matériau de la filière (4), et en ce que le support intermédiaire (8) est abaissé lors de la fermeture du moule.

2. Procédé selon la revendication 1, caractérisé en ce que l'ébauche (3) est déposée sur la surface (11) du support intermédiaire (8), de manière que le matériau déborde du pourtour de cette surface.

3. Dispositif pour la mise en oeuvre du procédé selon la revendication 1, comprenant une extrudeuse pour chauffer le matériau synthétique thermoplastique, avec une filière (1), éventuellement de forme annulaire, qui convient pour délivrer des portions de matériau et est susceptible d'être fermée, filière qui est éventuelle* ment entourée d'une tuyère annulaire (4) d'où peut s'écouler un flux de gaz, éventuellement de gaz chaud, qui est dirigé vers le point de séparation de portions de matériau de la filière (1), ainsi qu'au moins un moule de pression susceptible d'être fermé et composé d'une matrice de moulage (5) et d'un mandrin de moulage (13), la matrice (5) pouvant être disposée d'une part sous la filière (1) et d'autre part coaxialement au mandrin (13), et une pression de moulage étant susceptible d'être appliquée à et maintenue sur le mandrin (13) et/ou la matrice (5), caractérisé en ce qu'un support intermédiaire (8) est disposé de façon extensible dans la matrice (5) et forme par sa surface libre (11), à la position rétractée du support, une partie de la surface de moulage de la matrice (5), définissant la forme de la pièce moulée.

4. Dispositif selon la revendication 3, caractérisé en ce qu'une tige (12) est disposée coaxialement dans le support intermédiaire (8), de manière qu'elle puisse s'étendre axialement.

5. Dispositif selon l'une des revendications 3 ou 4, caractérisé en ce que la surface (11) présente une sur-élévation sur son pourtour.

Fig.1

Fig.2

Fig. 3

Fig. 4